(19) Europäisches Patentamt
European Patent Office
Office européen des brevets

(11) Veröffentlichungsnummer: **0 009 000**
**A1**

(12) # EUROPÄISCHE PATENTANMELDUNG

(21) Anmeldenummer: 79810070.7

(22) Anmeldetag: 20.08.79

(51) Int. Cl.[3]: C 08 J 5/12
C 08 L 21/00, C 07 F 3/00
C 07 F 15/00, C 07 F 9/90
C 07 F 7/22
//B29H9/10

(30) Priorität: 25.08.78 CH 9041/78

(43) Veröffentlichungstag der Anmeldung:
19.03.80 Patentblatt 80/6

(84) Benannte Vertragsstaaten:
CH DE FR GB IT

(71) Anmelder: CIBA-GEIGY AG
Patentabteilung Postfach
CH-4002 Basel(CH)

(72) Erfinder: Wirth, Hermann O., Dr.
Lessingstrasse 24
6140 Bensheim 3(DE)

(72) Erfinder: Knobloch, Gerrit, Dr.
Luisenweg 2
6145 Lindenfels/Odenwald(DE)

(54) **Metallsalzkomplexe; ihre Verwendung als Haftvermittler von vulkanisierbaren Elastomeren auf Metalloberflächen.**

(57) Metallsalze, welche mit komplexierenden Verbindungen des 1,2-Diol-Typus lipophil modifiziert sind, eignen sich als Haftvermittler zwischen vulkanisierbaren Elastomeren und Metalloberflächen.

EP 0 009 000 A1

Croydon Printing Company Ltd.

Verwendung von Metallkomplexen

BEZEICHNUNG GEÄNDERT
siehe Titelseite

Die vorliegende Erfindung betrifft die Verwendung von Metallsalzkomplexen als Haftverbesserer für vulkanisierbare Elastomere auf Metallflächen.

Bei der Herstellung von Gummiartikeln, wie Reifen, Gürtel, Förderbändern mit Metalleinlagen, Röhren mit Stützbändern oder -drähten, und allgemein bei der Herstellung von Gummiartikeln, bei der Gummi mit Metall gestützt wird, ist es nötig, zwischen dem Metall und der Elastomerenmischung eine starke und dauerhafte Bindung zu schaffen, um gute Eigenschaften und lange Lebensdauer des hergestellten Artikels zu gewährleisten.

Es ist bekannt, dass Nickel- und Kobaltsalze als Haftverbesserer von vulkanisierbaren Elastomeren auf Metalloberflächen dienen. Ein solches Verfahren zur Haftverbesserung ist z.B. in der DE-OS 2,447,853 beschrieben. Um mit den dort offenbarten Phosphonaten ausreichende Haftfestigkeit zu erzielen, müssen jedoch relativ grosse Mengen der Wirksubstanz eingesetzt werden, was zu unerwünschten Nebeneffekten führen kann.

Aus der DE-OS 2,739,312 sind komplexierte Metallsalze und deren Verwendung als Antistatika beschrieben worden. Ueberraschend wurde nun gefunden, dass sich verschiedene Komplexe dieser Art ausgezeichnet zur Haftverbesserung von vulkanisierbaren Elastomeren auf Metalloberflächen eignen.

Die vorliegende Erfindung betrifft daher die Verwendung von Metallsalzkomplexen der Formel I

$$M_q^m \cdot X_{q(m/n)}^n \cdot p\,Y \qquad (I),$$

worin

M Ni(II), Co(II), Cd(II), Fe(II), Zn(II), Sn(IV), Sb(III) oder Sb(V) ist, und

X Chlorid, Bromid, Rhodanid, Carbonat, Thiocarbonat, Nitrit, Hypophosphit, Phosphit, Phosphat, Sulfit, Sulfat, Formiat, Acetat, Propionat oder Maleinat bedeutet, und

m der Wertigkeit des Metalls M entsprechend +2, +3, +4 oder +5 ist, und

n der Wertigkeit des Anions X entsprechend -1, -2 oder -3 ist, und

q 1 oder falls der Quotient ($^m/n$) eine gebrochene Zahl ist 2 oder 3 bedeutet, mit der Bedingung, dass das Produkt q(m/n) eine ganze Zahl ist, und

p eine Zahl zwischen 1 und 8 bedeutet,

Y eine Gruppe (II) oder (III) bedeutet

$$R_1\text{-A-}\underset{OH}{CH}\text{-}\underset{OH}{CHR_2} \quad (II) \qquad R_1\text{-B-}(CH_2\text{-Q-O})_r\text{-H} \quad (III)$$

wobei

$R_1$ eine gegebenenfalls durch Sauerstoff- oder Schwefelatome unterbrochener und gegebenenfalls substituierter Kohlenwasserstoffrest aliphatischen oder aromatischen Charakters mit 3-30 C-Atomen bedeutet, und

$R_2$ Wasserstoff oder $C_1$-$C_{30}$ Alkyl bedeutet, und

A die direkte Bindung, $-CH(OH)-$ oder $-COO-CH_2-$ ist, und

B -O- oder -S- ist, und

Q $-CH_2-$, $-CH(OH)-CH_2-$ oder $-CH(CH_2OH)-$ bedeutet, und

r eine Zahl 1 bis 8 ist,

als Haftvermittler von vulkanisierbaren Elastomeren auf Metalloberflächen.

M kann Ni(II), Co(II), Cd(II), Fe(II), Zn(II), Sn(IV), Sb(III) oder Sb(V) sein, und ist bevorzugt Ni(II), Co(II) oder Cd(II).

X bedeutet bevorzugt Chlorid, Bromid, Phosphit oder Acetat.

Dadurch ergeben sich die bevorzugten Bedeutungen von m als +2, von n als -1 oder -2 und von q als 1.

Y ist eine Verbindung der Formeln II oder III, welche als gemeinsames Merkmal eine vicinale Diolgruppe besitzen, die bevorzugt endständig ist. Sofern in III Q $-CH_2-$ bedeutet, handelt es sich um eine Polyglycoläthergruppe mit endständiger OH-Gruppe.

In den Formeln II und III bedeutet $R_1$ einen Kohlenwasserstoffrest aliphatischen oder aromatischen Charakters mit 3-30, bevorzugt 3-20 und insbesondere mit 8-18 C-Atomen, welcher gegebenenfalls durch Sauerstoff- oder Schwefelatome unterbrochen und gegebenenfalls substituiert sein kann. Ist $R_1$ ein gegebenenfalls substituierter aliphatischer oder aromatischer Kohlenwasserstoffrest, so handelt es sich um lineares und insbesondere um

verzweigtes, vorzugsweise langkettenverzweigtes Alkyl, oder um mit 1 bis 3 Alkylgruppen mit insgesamt 1-12 C-Atomen substituiertes Cycloalkyl, Cycloalkylalkyl, Aryl oder Aralkyl. Beispiele für $R_1$ sind n-Propyl, Isopropyl, n-Butyl, sec.-Butyl, t.-Butyl, n-Pentyl, t-Pentyl, n-Hexyl, Isohexyl, 2-Aethylbutyl, n-Octyl, 1,1,3,3-Tetramethylbutyl, 2-Aethylhexyl, oder lineare oder verzweigte Isomere von Nonyl, Decyl, Undecyl, Dodecyl, Tetradecyl, Hexadecyl, Octadecyl, Eicosyl, Docosyl, Tetracosyl oder Triacontyl. Es kann sich dabei durchaus um (Isomeren)-Gemische handeln. Besonders geeignet sind verzweigte Alkylreste, die sich von technischen Alkoholen ableiten, wie z.B. Guebertalkohole und Dobanole (Hersteller Shell) oder Oxanole (Hersteller Ruhr-Chemie). Ist $R_2$ $C_1$-$C_{30}$ Alkyl, so handelt es sich z.B. um Methyl oder Aethyl oder $R_2$ kann eine für $R_1$ angegebene Bedeutung als Alkyl besitzen. $R_1$ enthält als Cycloalkyl bevorzugt 5-8 C-Atome, wie in Cyclopentyl, Cycloheptyl, Cyclooctyl oder insbesondere in Cyclohexyl. $R_1$ als Aryl steht bevorzugt für Phenyl und als Aralkyl bevorzugt für Benzyl, es kann sich jedoch auch um 4-Hydroxyphenyl-alkyl handeln. Die Alkylgruppe besitzt dann vorzugsweise 1 bis 3 C-Atome. Die Hydroxyphenyl-Gruppe ist bevorzugt mit 1 bis 3 Alkylgruppen, mit insgesamt 1-12 C-Atomen substituiert.

$R_1$ kann als aliphatischer Rest aber auch ein ungesättigter aliphatischer Rest sein, insbesondere mit 3-30 C-Atomen, vor allem 8-18 C-Atomen, wie Alkenyl, z.B. Octenyl.

Ist $R_1$ als Cycloalkyl, Cycloalkylalkyl, Aryl oder Aralkyl mit 1 bis 3 Alkylgruppen mit insgesamt 1-12 C-Atomen substituiert, so handelt es sich bei den Substituenten, z.B. um Methyl, Aethyl, iso-Propyl, t.-Butyl, sec.-Butyl, t.-Pentyl, 1,1,3,3-Tetramethylbutyl, Nonyl

oder 1,1,3,3,5,5-Hexamethylhexyl. Beispiele für $R_1$ als alkylsubstituiertes Cycloalkyl, Cycloalkylalkyl, Aryl oder Aralkyl sind Cyclohexyläthyl, Cycloheptylmethyl, Cyclohexylmethyl, 2,4-Dimethylcyclohexyl, 2,6-Di-t.-butylphenyl, 4-Nonylphenyl, 2,4,6-Tri-t.-butylphenyl, 2-t.-Butyl-4-methylphenyl, 4-Aethylbenzyl, 3,5-Di-t.butyl-4-hydroxybenzyl oder 3,5-Di-t.butyl-4-hydroxyphenyläthyl.

Mit Sauerstoff- oder Schwefelatomen unterbrochene aliphatische oder aromatische Kohlenwasserstoffreste als $R_1$ sind bevorzugt mit Sauerstoff- oder Schwefelatomen unterbrochene Alkylgruppen und insbesondere solche, welche sich von Umsetzungsprodukten aus Alkoholen oder Mercaptanen mit Aethylenoxid und/oder Propylenoxid ableiten. Es entstehen auf diese Weise insbesondere Reste des Cellosolve- oder Carbitol-Typus, wie das Methyl-Cellosolve-Derivat $CH_3$-O-$CH_2$-$CH_2$- oder das Methyl-Carbitol-Derivat $CH_3$-O-$CH_2$-$CH_2$-O-$CH_2$-$CH_2$-. Es sind dabei innerhalb der oben angegebenen C-Zahlen Polyäther- bzw. Polythioätherreste mit bis zu 15 Heteroatomen zu verstehen. Besondere Bedeutung haben auch mit Sauerstoff- oder Schwefelatome unterbrochene und gegebenenfalls substituierte Aralkylreste, wie 3,5-Di-t.butyl-4-hydroxyphenyl-propionyloxyäthyl oder 3-Methyl-5-t.butyl-4-hydroxyphenyl-propionyloxyäthyl.

In bevorzugten Verbindungen besitzen die Reste $R_1$ und $R_2$ zusammen nicht mehr als 30 C-Atome.

A kann die direkte Bindung, -CH(OH)- oder

$$-\overset{O}{\overset{\|}{C}}-O-CH_2-$$

bedeuten, bevorzugt ist A die direkte Bindung oder -CH(OH)-. Verbindungen, in denen A -C(O)O-$CH_2$- bedeutet, sind neu.

B bedeutet -O- oder -S-, bevorzugt -O-.

Der Index r kann eine ganze oder rationale Zahl von 1 bis 8 sein, und ist bevorzugt 1 oder 2, inbesondere aber 1. Es ist Gegenstand der Erfindung, dass auch Verbindungsgemische zum Einsatz kommen, d.h. es werden Gemische von Verbindungen mit verschiedenen r-Werten verwendet. In den Gemischen besitzt r einen statistischen Mittelwert, welcher durch eine rationale Zahl von 0,5 bis 8, bevorzugt von 1 bis 2 ausgedrückt werden kann. Dieser statistische Wert wird im folgenden als $\bar{r}$ bezeichnet. Wenn R $-CH_2-$ bedeutet, ist $\bar{r}$ bevorzugt eine rationale Zahl um 4.

p kann eine Zahl zwischen 1 und 8 sein, insbesondere 2 bis 4, bevorzugt 2, 3 oder 4.

Es ist möglich, dass die Verbindungen der Formel I etwas Wasser oder neutrale organische Moleküle, wie $CH_3OH$, $C_2H_5OH$, Dimethylformamid oder Dimethylsulfoxid, enthalten. Die Anzahl der vorhandenen "Fremdliganden" sollte in der Regel nicht mehr als 2 betragen. Bevorzugt werden Verbindungen, welche weitgehend frei von "Fremdliganden" sind.

Verbindungen, in denen Y eine Gruppe der Formel III ist, und Q $-CH_2-$ bedeutet, sind neu. Bevorzugt ist in diesem Falle $\bar{r}$ etwa 4.

Besonderes Interesse gilt Verbindungen der Formel I, worin

M Ni(II), Co(II), Cd(II), Fe(II), Zn(II), Sn(IV), Sb(III) oder Sb(V) ist, und

X Chlorid, Bromid, Phosphit oder Acetat bedeutet,

und

m der Wertigkeit des Metalls M entsprechend +2, +3, +4 oder +5 ist, und

n der Wertigkeit des Anions X entsprechend -1 oder -2 ist, und

q die oben angegebene Bedeutung hat, und

Y eine der Gruppen II oder III bedeutet, wobei

$R_1$ gegebenenfalls durch Sauerstoff oder Schwefelatome substituiertes $C_3$-$C_{20}$ Alkyl oder gegebenenfalls durch 1 bis 3 Alkylgruppen mit insgesamt 1-12 C-Atomen substituiertes Cyclohexyl, Cyclohexylmethyl oder Cyclohexyläthyl bedeutet, und

$R_2$ Wasserstoff ist, und

A die direkte Bindung oder -CH(OH)- ist, und

B -O- oder -S- ist, und

r 1 oder 2 ist, oder, wenn Q $-CH_2-$ bedeutet, 4 ist,

Q die oben angegebene Bedeutung hat, und

p 2, 3 oder 4 ist.

Bevorzugt werden Verbindungen der Formel I,

worin

M Ni(II), Co(II) oder Cd(II) ist, und

X Chlorid, Bromid, Phosphit oder Acetat ist, und

m +2 bedeutet, und

n der Wertigkeit des Anions X -1 oder -2 ist, und

q 1 bedeutet, und

Y eine Gruppe der Formeln II oder III ist, worin

$R_1$ $C_3$-$C_{15}$ Alkyl bedeutet, und

$R_2$ Wasserstoff ist, und

A die direkte Bindung oder -CH(OH)- ist, und

B -O- ist, und

r 1 oder 2 ist, oder, wenn Q $-CH_2-$ bedeutet, 4 ist,

Q die oben angegebene Bedeutung hat, und

p 2, 3 oder 4 ist.

Beispiele für Verbindungen der Formel I sind:

1) $Fe\ Cl_2 \cdot 2\ n\text{-}C_{12}H_{25}\text{-}O\text{-}CH_2\text{-}CH(OH)\text{-}CH_2OH$

2) $Fe\ Cl_2 \cdot 4\ i\text{-}C_8H_{17}\text{-}O\text{-}CH_2\text{-}CH(OH)\text{-}CH_2OH$

3) $Fe\ Cl_2 \cdot 4\ n\text{-}C_9H_{19}$ 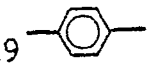 $O-(CH_2\text{-}CH(OH)\text{-}CH_2\text{-}O)_{3}\text{-}H$

4) $Co(O_2C\text{-}CH_3)_2 \cdot 4\ n\text{-}C_{18}H_{37}\text{-}O\text{-}CH_2\text{-}CH(OH)\text{-}CH_2OH$

5) $Co(O_2C\text{-}CH_3)_2 \cdot 4$ 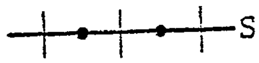 $S\text{-}CH_2\text{-}CH(OH)\text{-}CH_2OH$

6) $Ni(HPO_3) \cdot 4\ i\text{-}C_8H_{17}\text{-}O\text{-}CH_2\text{-}CH(OH)\text{-}CH_2OH$

7) $Ni(O_2C\text{-}CH_3)_2 \cdot 4\ n\text{-}C_{18}H_{37}\text{-}O\text{-}(CH_2\text{-}CH(OH)\text{-}CH_2\text{-}O)_{1}\text{-}H$

8) $Ni\ Cl_2 \cdot 2\ n\text{-}C_{12}H_{25}\text{-}O\text{-}CH_2\text{-}CH(OH)\text{-}CH_2OH$

9) $Ni\ Cl_2 \cdot 2\ i\text{-}C_8H_{17}\text{-}O\text{-}CH_2\text{-}CH(OH)\text{-}CH_2OH$

10) $Ni\ Cl_2 \cdot 4\ i\text{-}C_8H_{17}\text{-}O\text{-}CH_2\text{-}CH(OH)\text{-}CH_2OH$

11) $Ni\ (O_2C\text{-}CH_3)_2 \cdot 4\ n\text{-}C_{12}H_{25}\text{-}O\text{-}CH\text{-}CH(OH)\text{-}CH_2OH$

12) $Zn\ Cl_2 \cdot 3\ i\text{-}C_8H_{17}\text{-}O\text{-}CH_2\text{-}CH(OH)\text{-}CH_2OH$

13) $Zn\ Cl_2 \cdot 4\ n\text{-}C_{18}H_{37}\text{-}O\text{-}(CH_2\text{-}CH(OH)\text{-}CH_2\text{-}O)_{1}\text{-}H$

14) $Zn\ (HPO_3) \cdot 2\ n\text{-}C_{18}H_{37}\text{-}O\text{-}(CH_2\text{-}CH(OH)\text{-}CH_2\text{-}O)_{1}\text{-}H$

15) $Zn\ (SO_3) \cdot 4\ i\text{-}C_8H_{17}\text{-}O\text{-}CH_2\text{-}CH(OH)\text{-}CH_2OH$

16) $Zn\ Br_2 \cdot 2\ n\text{-}C_{18}H_{37}\text{-}O\text{-}(CH_2\text{-}CH(OH)\text{-}CH_2\text{-}O)_{1}\text{-}H$

17) $Cd\ (O_2C\text{-}CH_3)_2 \cdot 6\ i\text{-}C_{13}H_{27}\text{-}O\text{-}CH_2\text{-}CH(OH)\text{-}CH_2OH$

18) $Sn\ Cl_4 \cdot 4\ i\text{-}C_8H_{17}\text{-}O\text{-}CH_2\text{-}CH(OH)\text{-}CH_2OH$

19) $Sn\ Cl_4 \cdot 6\ i\text{-}C_8H_{17}\text{-}O\text{-}CH_2\text{-}CH(OH)\text{-}CH_2OH$

20) $Sb\ Cl_3 \cdot 4\ n\text{-}C_{18}H_{17}\text{-}O\text{-}(CH_2\text{-}CH(OH)\text{-}CH_2\text{-}O)_{5}\text{-}H$

21) Sb $Cl_5$ · 2 n-$C_{18}H_{37}$-O-($CH_2$-CH(OH)-$CH_2$-O$)_1$-H

22) $Fe_2(SO_4)_3$ · 6 i-$C_8H_{17}$-O-$CH_2$-CH(OH)-$CH_2$OH

23) $Cd(O_2C-CH_3)_2$ · 6 i-$C_8H_{17}$-O-$CH_2$-CH(OH)-$CH_2$OH

24) Cd $Cl_2$ · 5 i-$C_{13}H_{27}$-O-$CH_2$-CH(OH)-$CH_2$OH

25) $Ni(HPO_3)$ · 2 $CH_3$-$(CH_2)_{12-15}$-CH(OH)-$CH_2$OH

26) $Zn(H_2PO_3)$ · 3 n-$C_8H_{17}$-CH(OH)-$CH_2$OH

27) Ni $Cl_2$ · 6 $CH_3$-$(CH_2)_{12-15}$-CH(OH)-$CH_2$OH

28) Zn $Cl_2$ · 3 n-$C_8H_{17}$-CH(OH)-$CH_2$OH

29) Co $Cl_2$ · 2 n-$C_8H_{17}$-CH(OH)-$CH_2$OH

30) Cd $Cl_2$ · 2 $CH_3(CH_2)_{12-15}$-CH(OH)-$CH_2$OH

31) Co $Br_2$ · 4 n-$C_8H_{17}$-CH(OH)-$CH_2$OH

32) Ni $Cl_2$ · 4 n-$C_{12}H_{25}$C(O)-O-$CH_2$-CH(OH)-$CH_2$OH

33) $Cd(O_2C-CH_3)_2$ · 2 n-$C_3H_7$C(O)-O-$CH_2$-CH(OH)-$CH_2$OH

34) Co $Br_2$ · 4 n-$C_6H_{13}$C(O)-O-$CH_2$-CH(OH)-$CH_2$OH

35) $Ni(O_2C-CH_3)_2$ · 4 n-$C_3H_7$C(O)-O-$CH_2$-CH(OH)-$CH_2$OH

36) $Co(O_2C-CH_3)_2$ · 2 n-$C_{12}H_{25}$C(O)-O-$CH_2$-CH(OH)-$CH_2$OH

37) Ni $Cl_2$ · 2 $H_3C$-$(CH_2)_7$-CH=HC-$(CH_2)_7$-CO-O-$CH_2$-CH(OH)-$CH_2$-OH

38) Sb $Cl_3$ · 2 $^nC_{12}H_{25}$-O-($CH_2$-$CH_2$-O$)_4$-H.

Die Herstellung der Verbindungen der Formel I ist bekannt, und besteht beispielsweise darin, dass man ein Metallsalz $M_q^m X_{q(m/n)}^n$ oder dessen Hydrat direkt, oder in einem geeigneten organischen Lösungsmittel mit p Molen pro Mol Metallsalz einer komplexierenden Verbindung der Formel Y umsetzt und gegebenenfalls danach das Wasser oder das Lösungsmittel aus dem Reaktionsgemisch entfernt.

Die Symbole M, X, Y, m, n, p und q haben dabei die oben angegebene Bedeutung. Die Reaktion wird bevorzugt bei Temperaturen bis 150°C, insbesondere bei 50-120°C durchgeführt.

In einer anderen Verfahrensvariante, welche ebenfalls bekannt ist, wird beispielsweise ein Metallalkoholat mit p Molen einer komplexierenden Verbindung der Formel Y umgesetzt und anschliessend durch Zugabe einer Säure $H_nX$ das Anion X eingeführt. Diese Reaktion ist generell anwendbar und läuft quantitativ ab.

Beie Herstellungsvarianten sind ausführlich in der DE-OS 2,739,312 beschrieben worden.

Ein weiterer Gegenstand der vorliegenden Erfindung sind neue Verbindungen der allgemeinen Formel I, worin Y eine Gruppe der Formel II ist, und A $-COO-CH_2-$ bedeutet, oder ferner Y eine Gruppe der Formel III ist, worin Q $-CH_2-$ bedeutet, und die übrigen Symbole, inklusive deren bevorzugten Bedeutungen den oben erwähnten Definitionen entsprechen.

Die Herstellung der neuen Verbindungen erfolgt auf die oben beschriebene Weise. Die Ausgangsprodukte sind bekannte Stoffe und vielfach handelsüblich.

Die erfindungsgemässen Metallkomplexe verbessern schon bei geringer Einsatzmenge die Haftung zwischen Metalloberflächen und vulkanisiertem Elastomer.

Erfindungsgemäss wird somit auch ein Verfahren beschrieben, um eine vulkanisierbare Elastomeren-Mischung an eine Metalloberfläche zu binden, dadurch gekennzeichnet, dass man zu einer vulkanisierbaren Elastomeren-Mischung eine Verbindung der Formel I in einer Menge von 0,05-10 Gew.-%, bezogen auf das Gewicht des Elastomeren, gibt, vorzugsweise 0,05-5,0% und insbesondere 0,1-3%, und die Mischung vulkanisiert, während sie in Kontakt mit der Metalloberfläche ist, um eine starke und dauerhafte Bindung zu erzielen. Die Erfindung betrifft auch eine Mischung aus einem ungesättigten vulkanisierbaren Elastomeren, einem Vulkanisationsmittel, und einer Verbindung der Formel I in einer Menge von 0,05-10 Gew.-%, bezogen auf das Gewicht des Elastomeren, bevorzugt 0,05-5,0%.

Die ungesättigte vulkanisierbare Elastomeren-Mischung kann hergestellt werden, indem man die Bestandteile der Mischung in üblicher Weise in einem Mischer mischt, z.B. in einem Banbury-Mischer, Extruder und/oder Mischwalze. Nach dem Mischen wird die Mischung auf die Metalloberfläche gebracht und vulkanisiert. Nach Aufbringen auf die Metalloberfläche wird die Mischung normalerweise bei einer Temperatur von 140-180°C vulkanisiert. Die Vulkanisationszeit kann entsprechend der Vulkanisationstemperatur und den gewünschten Eigenschaften des Vulkanisats variiert werden, wie dies bekannt ist. Allgemein wird mit längerer Vulkanisationszeit die Haftung erhöht. Die Erfindung betrifft ferner das Produkt dieses eben beschriebenen Verfahrens.

Die Verbindungen der Formel I können zusammen mit einem vulkanisierbaren Elastomeren verwendet werden. Alle natürlichen und/oder synthetischen Kautschuke sind erfindungsgemäss verwendbar. Elastomere sind z.B. Polydiene, wie Polybutadien oder Polyisopren einschliesslich Naturkautschuk, Copolymere von Dienen wie Butadien oder Isopren mit anderen copolymerisierbaren Monomeren, wie

Styrol, Alpha-methylstyrol, ein Acryl-ester, Methylisopropenylketon, Isobutylen, Acrylnitril oder eine ungesättigte Carbonsäure, halogenierter Kautschuk, wie Polychloropren oder Fluoror-Kautschuke, Interpolymere von einem oder mehreren Monoolefinen mit einem Monomer, das Unsättigung in das Interpolymere bringt, z.B. ein ungesättigtes Aethylen/Propylen-Interpolymer, wie ein Aethylen/Propylen/Dicyclopentadien-Terpolymer, Schwefel-vulkanisierbarer Polyurethan-Kautschuk, Butyl-Kautschuk mit mindestens 0,8% Unsättigung, und Kombinationen der obigen Elastomeren, z.B. Naturkautschuk/Butadien-Styrol-Copolymermischsungen, eine Mischung eines gesättigten Copolymeren von Aethylen und Propylen mit einem ungesättigten Interpolymeren von Aethylen, Propylen und einem Monomer, das Unsättigung in das Interpolymere bringt.

Zusätzlich zu den Verbindungen der Formel I können die erfindungsgemässen Mischungen andere herkömmliche Additive enthalten, wie Beschleuniger, Aktivatoren, Anti-Bruchmittel, Antioxidantien, Antiozonantien, Flammhemmer, Antistatika, Dispergiermittel, Streckmittel, Füllstoffe, innere Schmiermittel, Weichmacher, Verarbeitungshilfsmittel, Hemmstoffe, Kleber, Vulkanisiermittel, Pigmente usw.. Diese herkömmlichen Bestandteile und Additive werden zu dem Elastomeren-Material in geeigneter Menge in üblicher Weise zugegeben, um eine vulkanisierbare Mischung auf der Basis des gewählten Elastomeren zu erzielen.

Die vulkanisierbare Mischung, die erfindungsgemäss haftet, enthält bevorzugt Russ. Die Menge Russ hängt von der gewünschten Art des Produkts ab. Obgleich die Härte mit zunehmendem Russgehalt zunimmt, nimmt die Elastizität nach der Vulkanisation ab. Bevorzugt sind aber Russmengen von 25-80 Gewichtsteile Russ pro 100

Gewichtsteile Elastomer in der Mischung.

Die Verwendung von Schwefel als Vulkanisiermittel ist bevorzugt, da er bekanntlich die Haftung zwischen der Elastomeren-Mischung und dem Metall erleichtert, insbesondere bei Messing- oder Zink- belegten Metallen. Die Menge Schwefel in der synthetischen Kautschukmischung kann 0,1-25 Gewichtsteile, bevorzugt 0,5-10 Gewichtsteile pro 100 Gewichtsteile vulkanisierbares Elastomer betragen. Die Verwendung der erfindungsgemässen Verbindungen gestattet es, wenig Schwefel in der Mischung vorzusehen.

Beispiele für erfindungsgemäss verwendbare Beschleuniger sind Mercaptobenzothiazol oder N-Cyclohexylbenzothiazol-2-sulphenamid, z.B. in einer Menge von 0,1-6,0 Gewichtsteile pro 100 Gewischtsteile Elastomer.

Metalle, an die die Elastomeren-Mischung gebunden wird, sind z.B. Eisen, Stahl, Cobalt, Nickel, Kupfer, Zink, Titan, Vanadium, Chrom, Zinn und Legierungen davon, insbesondere Messing und Bronze. Bevorzugt sind Stahl oder Messing, Bronze- oder Zink-plattierte Metalle. Es ist nicht nötig, die Metalloberfläche aufzurauhen, bevor die Mischung aufgetragen wird, da die Bindung zwischen Mischung und Metall nicht mechanisch ist. Es ist aber günstig, die Metalloberfläche von Fett und Schmutz zu befreien, bevor die Mischung aufgetragen wird.

Beispiel 1

$$NiCl_2 \cdot 2\ H_3C{-}\!\!(CH_2)_7{-}CH{=}HC{-}(CH_2)_7{-}CO{-}O{-}CH_2{-}\underset{OH}{CH}{-}\underset{OH}{CH_2}$$

Die Lösung von 11,9 g $NiCl_2 \cdot 6\ H_2O$ in 100 ml Methanol wird mit der Lösung von 35,6 g Glycerinmonooleat in 100 ml Toluol vereinigt. Nach Entfernung der Lösungsmittel mittels Rotationsverdampfer hinterbleibt der Komplex (42,3 g = 100% d.Th.) als grüne, hochviskose Flüssigkeit.

Beispiel 2

$$SbCl_3 \cdot 2\ {}^{n}C_{12}H_{25}{-}O{-}(CH_2{-}CH_2{-}O)_4{-}H$$

Zu der Lösung von 13,7 g $SbCl_3$ in 70 ml Diäthyläther werden 42 g des Aethylenoxidadduktes:

$$^{n}C_{12}H_{25}{-}O{-}(CH_2{-}CH_2{-}O)_4{-}H$$

gegeben und der Aether mit Hilfe eines Rotationsverdampfers entfernt. Der zurückbleibende Komplex ist eine viskose, leicht gelbt gefärbte Flüssigkeit. Ausbeute praktisch quantitativ.

Beispiel 3

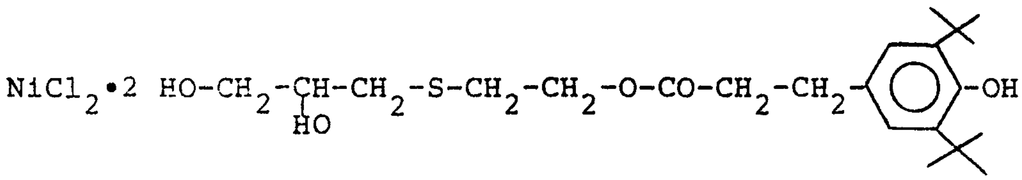

Eine Lösung von 33,8 g (0,1 Mol) 3,5-Di-t.butyl-4-hydroxyphenyl-propionyloxy-ß-mercaptoäthan in 100 ml Methanol wird mit ca. 100 mg Natriummethylat versetzt, anschliessend werden 7,5 g (0,1 Mol) Glycidol zugetropft und das Reaktionsgemisch 1 Stunde auf 60°C erwärmt.

Ohne Isolierung des Glycidoladduktes wird eine Lösung von 12 g (0,05 Mol) Nickelchlorid-Hexahydrat, in möglichst wenig Methanol gelöst, mit der Reaktionslösung vereinigt; anschliessend wird die Lösung mit Hilfe eines Rotationsverdampfers i.V. eingeengt. Zur Entfernung des restlichen Wassers wird der Rückstand nochmals mit Methanol in Lösung gebracht und abermals mittels Rotationsverdampfer i.V. vom Lösungsmittel befreit, zuletzt unter Verwendung einer Oelpumpe.

Es hinterbleibt ein hochviskoses Produkt, das in organischen Lösungsmittel wie Toluol oder n-Heptan glatt löslich ist.

Ni (ber.): 7,12 Ni (gef.): 6,7/6,9

Beispiel 4

Prüfung von Haftvermittlern für Kautschuk-Metall

I. Rezeptur

| | | Teile | |
|---|---|---|---|
| Naturkautschuk (NR) | (SMR 5L) | 100,0 | |
| | Philblack N 550 | 60,0 | Grundmischung |
| | ZnO | 5,0 | |
| | Stearinsäure | 1,0 | |
| | Naftolen ZD | 5,0 | |
| | Schwefel | 1,2 | |
| | Vulkacit CZ/C | 0,8 | |
| | Vulkacit Thiuram | 0,4 | |

II. Mischungsherstellung:

Die Grundmischungen wurden in einem Laborinnenmischer Typ LH 1 (Werner & Pfleiderer) wie folgt hergestellt:

Füllfaktor 1,1; Drezahl 70 rpm; Knetkammertemperaturen für NR 40°C.

| Mischplan: | Zeit in Minuten |
|---|---|
| 1. Mastizieren des Kautschuks | 1,0 |
| 2. Einarbeiten von Stearinsäure, 1/3 Russ und 1/3 Oel | 2,0 |
| 3. Einarbeiten von ZnO, 1/3 Russ und 1/3 Oel | 2,0 |
| 4. Einarbeiten von 1/3 Russ und 1/3 Oel | 2,0 |
| 5. Fertigmischen | 0,5 |
| Gesamtmischzeit in Minuten | 7,5 |
| Mischungsendtemperatur in °C | 130 |

Jeweils drei Ansätze aus dem Innenmischer (ca. 3,5 kg) wurden auf einem Walzwerk etwa 2 Minuten homogenisiert (Walzengrösse 200.450 mm, Temperaturen wie die Anfangstemperaturen im Innenmischer, Friktion 1:1,25) und dann die Vulkanisationssysteme eingemischt (Mischzeiten 10-12 Minuten).

III. Herstellung der Testkörper

Die so erhaltenen Fertigmischungen wurden portioniert, die auf Teile Kautschuk berechneten Mengen der Haftvermittler auf einem Mischwalzwerk (Walzengrösse 100x200 mm, Temperaturen wie oben) eingemischt und Felle von 5-6 mm Dicke ausgezogen, aus denen zwei Streifen von je 0,5x8,0 inch (ca. 10 g) geschnitten wurden.

Der vermessingte Stahlcord (Konstruktion 5x0,22 mm, Messing mit 68% Kupfer) wurde vor der Verwendung 30 Minuten in Dichlormethan entfettet und anschliessend 20-30 Minuten getrocknet.

Die Vulkanisationsform wurde in einer hydraulischen Heizpresse etwa 3 Minuten vorgewärmt und dann in folgender Reihenfolge gefüllt: Messing-Verstärkungsplatte, Kautschukmischung, vermessingter Stahlcord, Kautschukmischung, Messing-Verstärkungsplatte und dann Deckplatte der Vulkanisierform.

Die Vulkanisationstemperaturen betrugen für NR 140°C.

Die Vulkanisationszeiten ergaben sich aus $T_{95}$ der Rheometerkurven (Zeit bis zum Erreichen von 95% des maximalen Drehmomentes) plus einem Zeitzuschlag von

1/3 $T_{95}$.

Die aus dem Gummiblock herausragenden Drahtenden wurden an der Unterseite mit einer Drahtschere gekappt und vorhandene Draht- und Gummireste an einer Schleifmaschine abgeschliffen. Die Drähte an der Oberseite wurden mit einem Skalpell sorgfältig von Gummiresten gesäubert.

IV. Prüfmethode:

Die Testproben wurden 18-24 Stunden bei Raumtemperatur gelagert. Mit Hilfe einer Universal-Zugprüfmaschine RK 1000 wurden die einvulkanisierten Drähte entsprechend ASTM-Test D 2229-73 unter Berücksichtigung der von A.E. Hicks in Rubber Chemistry and Technology, 45, 26-48 (1972) beschriebenen Modifikationen aus dem Gummiblock herausgezogen.

V. Auswertung:

Die in den Tabellen angegebenen Werte sind die auf 1 cm Probendicke berechneten durchschnittlichen Kräfte in kp, die zum Herausziehen der Drähte aus dem Gummiblock notwendig sind. Der Blank-Wert ist der Durchschnitt aus allen im Verlauf dieser Untersuchungen gemessenen Nullwerte, d.h. aus den Resultaten mit den Vulkanisaten ohne Haftvermittler.

<u>Tabelle</u>

Ergebnisse der Prüfung von Metallsalzkomplexen als Haftvermittler zwischen vulkanisiertem Natrukautschuk und vermessingtem Stahlcord.

| Nr. | Haftvermittler | Konzentration (Teile pro 100 Teile Kautschuk) | Haftwerte (in kp/cm) |
|---|---|---|---|
| 1 | Kontrolle (ohne Haftvermittler) | 0 | 3 |
| 2 | $Co(OAC)_2 \cdot 4\ {}^{n}C_{18}H_{37}-O-(CH_2-C_2H_3(OH)-O)_1-H$ | 2,0 | 28 |
| 3 | $Ni(OAC)_2 \cdot 4\ {}^{n}C_{18}H_{37}-O-(CH_2-C_2H_3(OH)-O)_1-H$ | 0,5<br>1,0<br>2,0 | 13<br>16<br>27 |
| 4 | $Ni\ Cl_2 \cdot 4\ {}^{i}C_8H_{17}-O-CH_2-CH(OH)-CH_2(OH)$ | 2,0 | 32 |

Fortsetzung

| Nr. | Haftvermittler | Konzentration (Teile pro 100 Teile Kautschuk) | Haftwerte (in kp/cm) |
|---|---|---|---|
| 5 | $Ni\ Cl_2 \cdot 3\ {}^{n}C_{18}H_{37}-O-(-CH_2-C_2H_3(OH)-O-)_{1}-H$ | 1,0<br>2,0 | 11<br>29 |
| 6 | $Ni\ Cl_2 \cdot 2\ {}^{n}C_{18}H_{37}-O-(-CH_2-C_2H_3(OH)-O-)_{1}-H$ | 1,0<br>1,5<br>2,0 | 23<br>29<br>30 |
| 7 | $Cd(OAC)_2 \cdot 6\ {}^{i}C_8H_{17}-O-CH_2-CH(OH)-CH_2(OH)$ | 2,0 | 20 |
| 8 | $Ni\ Cl_2 \cdot 2\ H_3C-(-CH_2-)_7-CH{=}HC-(-CH_2-)_7-CO-O-CH_2-CH(OH)-CH_2-OH$ | 1,0 | 23 |
| 9 | $Ni\ HPO_3 \cdot 3\ H_3C-(-CH_2-)_{12-15}-CH(OH)-CH_2(OH)$ | 2,0 | 23 |

Patentansprüche

1. Verwendung von Metallsalzkomplexen der Formel I

$$M_q^m \cdot X_{q(m/n)}^n \cdot p\,Y \qquad (I),$$

worin

M Ni(II), Co(II), Cd(II), Fe(II), Zn(II), Sn(IV), Sb(III) oder Sb(V) ist, und

X Chlorid, Bromid, Rhodanid, Carbonat, Thiocarbonat, Nitrit, Hypophosphit, Phosphit, Phosphat, Sulfit, Sulfat, Formiat, Acetat, Propionat oder Maleinat bedeutet, und

m der Wertigkeit des Metalls M entsprechend +2, +3, +4 oder +5 ist, und

n der Wertigkeit des Anions X entsprechend -1, -2 oder -3 ist, und

q 1 oder falls der Quotient ($^m/n$) eine gebrochene Zahl ist 2 oder 3 bedeutet, mit der Bedingung, dass das Produkt q(m/n) eine ganze Zahl ist, und

p eine Zahl zwischen 1 und 8 bedeutet,

Y eine Gruppe (II) oder (III) bedeutet

$$R_1\text{-A-}\underset{OH}{CH}\text{-}\underset{OH}{CHR_2} \quad (II) \qquad R_1\text{-B-}(CH_2\text{-Q-O})_r\text{-H} \quad (III)$$

wobei

$R_1$ eine gegebenenfalls durch Sauerstoff- oder Schwefelatome unterbrochener und gegebenenfalls substituierter Kohlenwasserstoffrest aliphatischen oder aromatischen Charakters mit 3-30 C-Atomen bedeutet, und

$R_2$ Wasserstoff oder $C_1$-$C_{30}$ Alkyl bedeutet, und
A die direkte Bindung, -CH(OH)- oder -COO-$CH_2$- ist, und
B -O- oder -S- ist, und
Q -$CH_2$-, -CH(OH)-$CH_2$- oder -CH($CH_2$OH)- bedeutet, und
r eine Zahl 1 bis 8 ist

als Haftvermittler von vulkanisierbaren Elastomeren auf Metalloberflächen.

2. Verwendung gemäss Anspruch 1 von Verbindungen der Formel I, worin
M Ni(II), Co(II), Cd(II), Fe(II), Zn(II), Sn(IV), Sb(III) oder Sb(V) ist, und
X Chlorid, Bromid, Phosphit oder Acetat bedeutet, und
m der Wertigkeit des Metalls M entsprechend +2, +3, +4 oder +5 ist, und
n der Wertigkeit des Anions X entsprechend -1 oder -2 ist, und
q die oben angegebene Bedeutung hat, und
Y eine der Gruppen II oder III bedeutet, wobei
$R_1$ gegebenenfalls durch Sauerstoff oder Schwefelatome substituiertes $C_3$-$C_{20}$ Alkyl oder gegebenenfalls durch 1 bis 3 Alkylgruppen mit insgesamt 1-12 C-Atomen substituiertes Cyclohexyl, Cyclohexylmethyl oder Cyclohexyläthyl bedeutet, und
$R_2$ Wasserstoff ist, und
A die direkte Bindung oder -CH(OH)- ist, und
B -O- oder -S- ist, und
r 1 oder 2 ist, oder, wenn Q -$CH_2$- bedeutet, 4 ist

Q die oben angegebene Bedeutung hat, und
p 2, 3 oder 4 ist.

3. Verwendung gemäss Anspruch 1 von Verbindungen der Formel I, worin
M Ni(II), Co(II) oder Cd(II) ist, und
X Chlorid, Bromid, Phosphit oder Acetat ist, und
m +2 bedeutet, und
n der Wertigkeit des Anions X -1 oder -2 ist, und
q 1 bedeutet, und
Y eine Gruppe der Formeln II oder III ist, worin
$R_1$ $C_3$-$C_{15}$ Alkyl bedeutet, und
$R_2$ Wasserstoff ist, und
A die direkte Bindung oder -CH(OH)- ist, und
B -O- ist, und
r 1 oder 2 ist, oder, wenn Q $-CH_2$ bedeutet, 4 ist,
Q die oben angegebene Bedeutung hat, und
p 2, 3 oder 4 ist.

4. Verwendung gemäss Anspruch 1 von Verbindungen der Formel I, worin
M Ni(II), Co(II) oder Cd(II) ist.

5. Verwendung gemäss Anspruch 1 von Verbindungen der Formel I, worin
X Chlorid, Bromid, Phosphit oder Acetat bedeutet.

6. Verwendung gemäss Anspruch 1 von Verbindungen der Formel I, worin Y eine Gruppe der Formel III ist, wobei B -O- bedeutet.

7. Verwendung gemäss Anspruch 1 von Verbindungen der Formel I, worin Y eine Gruppe der Formel II ist,

wobei A die direkte Bindung oder -CH(OH)- bedeutet.

8. Verwendung gemäss Anspruch 1 von Verbindungen der Formel I, worin Y eine Gruppe der Formel III ist, wobei r 1 oder 2 bedeutet.

9. Verwendung gemäss Anspruch 1, von Verbindungen der Formel I, worin Y eine Gruppe der Formel III ist, worin $R_1$ gegebenenfalls im Phenylteil mit 1 bis 3 Alkylgruppen mit insgesamt 1 bis 12 C-Atomen substituiertes 4-Hydroxylphenyl-alkyl bedeutet, und die übrigen Symbole die im Anspruch 1 angegebene Bedeutung haben.

10. Verwendung gemäss Anspruch 1, von Verbindungen der Formel I, worin Y eine Gruppe der Formel III ist, worin $R_1$ 3-Methyl-5-t.butyl-4-hydroxyphenyl-propionyloxyäthyl oder 3,5-Di-t.butyl-4-hydroxyphenyl-propionyloxyäthyl bedeutet.

11. Verbindungen der Formel I, gemäss Anspruch 1, worin

Y eine Gruppe der Formel II ist, worin A $-C(O)-O-CH_2-$ bedeutet oder ferner Y eine Gruppe der Formel III ist, worin Q $-CH_2-$ bedeutet, und die übrigen Symbole die im Anspruch 1 angegebene Bedeutung haben.

12. Vulkanisierbare Elastomere enthaltend eine Verbindung der Formel I gemäss Anspruch 9.

13. Verfahren zum Binden einer vulkanisierbaren Elastomeren-Mischung an eine Metalloberfläche, dadurch gekennzeichnet, dass man zu einer vulkanisierbaren Elastomeren-Mischung eine Verbindung der Formel I in einer Menge

von 0,05-10 Gew.-% bezogen auf das Gewicht des Elastomeren gibt, und die Mischung vulkanisiert, während sie in Kontakt mit der Metalloberfläche ist.

14. Verwendung von $NiCl_2 \cdot 3\,^{n}C_{18}H_{37}-O-(CH_2-C_2H_3[OH]-O)_{1}-H$ gemäss Anspruch 1.

0009000

Europäisches Patentamt

**EUROPÄISCHER RECHERCHENBERICHT**

Nummer der Anmeldung

EP 79 81 0070

| Kategorie | EINSCHLÄGIGE DOKUMENTE — Kennzeichnung des Dokuments mit Angabe, soweit erforderlich, der maßgeblichen Teile | betrifft Anspruch |
|---|---|---|
| | NL - A - 74 13296 (CIBA-GEIGY)<br>* Patentanspruch 1 * | 1 |
| D | & DE - A - 2 447 853<br>-- | |
| DA | DE - A - 2 739 312 (CIBA-GEIGY)<br>* Patentansprüche 1-32 *<br>-- | 1,11 |
| | GB - A - 959 043 (FERRO CORP.)<br>* Patentansprüche 1-4,9; Seite 2, Zeile 42 - Seite 3, Zeile 83 *<br>-- | 11 |
| A | FR - A - 2 368 515 (BRIDGESTONE TIRE)<br>* Patentansprüche 1,7,16 *<br>-- | 1 |
| A | FR - A - 2 311 797 (YOKAHAMA RUBBER)<br>* Patentansprüche 1,4 *<br>---- | 1 |

KLASSIFIKATION DER ANMELDUNG (Int.Cl. 3)

C 08 J 5/12
C 08 L 21/00
C 07 F 3/00
15/00
9/90
7/22//
B 29 H 9/10

RECHERCHIERTE SACHGEBIETE (Int. Cl. 3)

C 08 J 5/12
5/10
C 08 L 7/00
9/00
9/02
9/06
21/00
C 07 F 15/04
15/00
9/90

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 04-12-1979 | HALLEMEESCH |